# EUROPEAN PATENT SPECIFICATION

(11) **EP 3 699 797 B1**
(45) Date of publication and mention of the grant of the patent: **28.08.2024**
(21) Application number: 18868645.5
(22) Date of filing: 09.05.2018
(51) Int. Cl.: G06F 21/57, G06F 9/52, G06F 9/54, G06F 11/20

(54) **DATA PROCESSING METHOD AND DEVICE, AND COMPUTER APPARATUS**
DATENVERARBEITUNGSVERFAHREN UND -VORRICHTUNG SOWIE COMPUTERVORRICHTUNG
MÉTHODE ET DISPOSITIF DE TRAITEMENT DE DONNÉES ET APPAREIL INFORMATIQUE

(30) Priority: 18.10.2017 CN 201710972563
(43) Date of publication of application: 26.08.2020
(73) Proprietor: CRSC Research & Design Institute Group Co., Ltd., Beijing 100070 (CN)
(72) Inventor: WANG, Yimin, Beijing 100070 (CN); WANG, Hailong, Beijing 100070 (CN); LIU, Zhen, Beijing 100070 (CN); ZUO, Lin, Beijing 100070 (CN); GUO, Weiwei, Beijing 100070 (CN); HUANG, Yaqian, Beijing 100070 (CN); YE, Feng, Beijing 100070 (CN); LIU, Xiaodong, Beijing 100070 (CN)
(74) Representative: Huang, Liwei
(86) International application number: PCT/CN2018/086114
(87) International publication number: WO 2019/076035

(56) References cited:
- CN-A- 102 193 799
- CN-A- 102 231 125
- CN-A- 103 577 759
- CN-A- 103 713 959
- CN-A- 105 739 299
- CN-A- 106 627 668
- CN-A- 107 992 752
- CHEN GUANGWU ET AL: "Research and Implementation of Fault-Tolerant Computer Interlocking System", COMPUTATIONAL INTELLIGENCE AND SOFTWARE ENGINEERING (CISE), 2010 INTERNATIONAL CONFERENCE ON, IEEE, PISCATAWAY, NJ, USA, 10 December 2010 (2010-12-10), pages 1 - 4, XP031841202, ISBN: 978-1-4244-5391-7
- PING TAN ET AL: "Design and reliability, availability, maintainability, and safety analysis of a high availability quadruple vital computer system", JOURNAL OF ZHEJIANG UNIVERSITY SCIENCE A; AN INTERNATIONAL APPLIED PHYSICS & ENGINEERING JOURNAL, SPRINGER, BERLIN, DE, vol. 12, no. 12, 6 December 2011 (2011-12-06), pages 926 - 935, XP019987640, ISSN: 1862-1775, DOI: 10.1631/JZUS.A11GT003
- CHAABANE FATEN ET AL: "A Multimedia Tracing Traitors Scheme Using Multi-level Hierarchical Structure for Tardos Fingerprint Based Audio Watermarking :", PROCEEDINGS OF THE 11TH INTERNATIONAL CONFERENCE ON SIGNAL PROCESSING AND MULTIMEDIA APPLICATIONS, 1 January 2014 (2014-01-01), pages 289 - 296, XP093147158, ISBN: 978-989-7580-46-8, Retrieved from the Internet <URL:https://ieeexplore.ieee.org/stampPDF/getPDF.jsp?tp=&arnumber=7514521&ref=aHR0cHM6Ly9pZWVleHBsb3JlLmllZWUub3JnL2Fic3RyYWN0L2RvY3VtZW50Lzc1MTQ1MjE/Y2FzYV90b2tlbj1vVnkwUGNKQUFmNEFBQUFBOnlLZE9aUUJHSGhrTlVaUmlWSDB1T0VSRVBSc1luQy1mbWtIQmhyQ3gzWHpTQU0yc0hwM0Y5aHF3WmJkUTQwREhXbXlOQU0yaQ==> DOI: 10.5220/0005066602890296

## Description

### TECHNICAL FIELD

The present invention relates to a field of communication, and more particularly, to a data processing method and a computer readable storage medium.

### BACKGROUND

A vital computer system consists of a vital computer and a non-vital computer; the vital computer deploys safety-related services, and the non-vital computer deploys non-safety-related services. In an existing vital computer system, a double 2-vote-2 vital computer architecture is mostly used, with double-set redundancy design, and both systems assuming safety functions.

With development of a railway signal technology, volume of business carried by a terrestrial signal system logic computation unit has become increasingly large and complex; a logic computation software platform needs to provide sufficient computing performance and data throughput capacity, which leads to extremely high requirements on various items of performance of the software platform; a current vital computer platform can no longer meet such requirements, and thus cannot guarantee safety of the vital computer system.

CHEN GUANGWU ET AL: "Research and Implementation of Fault-Tolerant Computer Interlocking System" (COMPUTATIONAL INTELLIGENCE AND SOFTWARE ENGINEERING (CISE), 2010 INTERNATIONAL CONFERENCE ON, IEEE, PISCATAWAY, NJ, USA, 10 December 2010 (2010-12-10), pages 1 -4) discloses a computer interlocking system for railway stations. CN 105739299A discloses a control device based on double 2-vote-2 safety redundancy system.

### SUMMARY

In view of this, an objective of the present invention is to provide a data processing method and a computer readable storage medium, so as to solve at least one of problems as mentioned above.

According to one aspect of the present invention, a data processing method is provided according to the claim 1, as well as some advantageous embodiments according to its dependent claims.

According to still another aspect of the present invention, there is provided a computer readable storage medium, the computer readable storage medium storing the computer program executing the above-described method.

By the technical solution provided by the present invention, it is possible to improve safety of the vital computer system.

### BRIEF DESCRIPTION OF THE DRAWINGS

Embodiments of the present invention are described with reference to accompanying drawings below, so that the above-described and other objectives, features and advantages of the present invention will be more apparent, in the drawings:
FIG. 1 is a structural diagram of a vital computer system;
FIG. 2 is a flow chart of a data processing method according to an embodiment of the present invention;
FIG. 3 is a working schematic diagram of a plurality of processes based on a VxWorks operating system according to an embodiment of the present invention;
FIG. 4 is a working schematic diagram of a logic computation thread according to an embodiment of the present invention;
FIG. 5 is a working flow chart of a logic computation thread according to an embodiment of the present invention;
FIG. 6 is a working schematic diagram of a communication data receiving thread according to an embodiment of the present invention;
FIG. 7 is a working flow chart of the communication data receiving thread according to the embodiment of the present invention;
FIG. 8 is a working schematic diagram of an output data thread according to an embodiment of the present invention;
FIG. 9 is a working flow chart of the output data thread according to the embodiment of the present invention;
FIG. 10 is a structural block diagram of a data processing apparatus according to an embodiment of the present invention;
FIG. 11 is a structural block diagram of an internal communication unit 101 according to an embodiment of the present invention;
FIG. 12 is a structural block diagram of a logic computation unit 102 according to an embodiment of the present invention.

### DETAILED DESCRIPTION

Hereinafter, the present invention is described based embodiments; however, the present invention is not limited to these embodiments only.

With increase of volume of business carried by a terrestrial signal system logic computation unit, requirements on various items of performance of a vital computer safety platform is also raised, a current safety platform can no longer meet such requirements, and therefore, an embodiment of the present invention provide a data processing solution, to meet a present situation of relatively high requirements on various items of performance of the current safety platform, so as to ensure safety of a vital computer system.

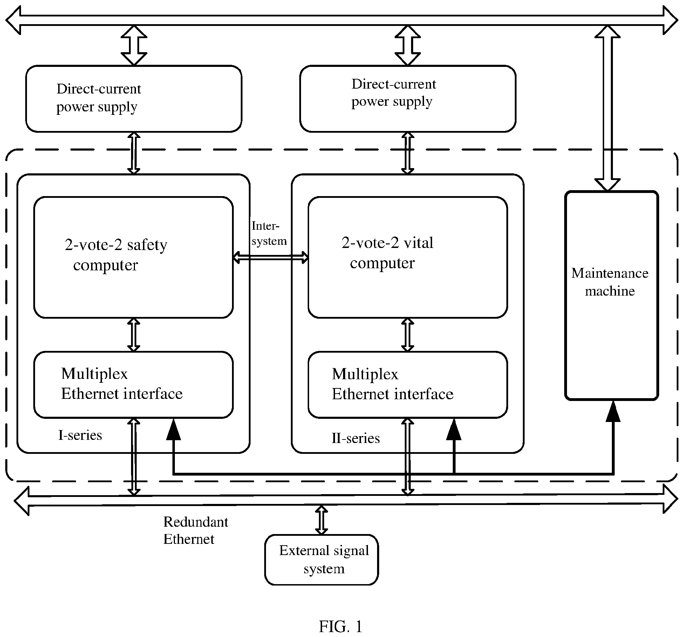

FIG. 1 is a structural diagram of the vital computer system; and as shown in FIG. 1, the system comprises: a I-series system, a II-series system, and a maintenance machine; each system includes a 2-vote-2 vital computer and a multiplex Ethernet interface, an external signal system communicates with the I-series system and the II-series system via redundant Ethernet, respectively, and the I-series system and the II-series system communicate with the maintenance machine via the multiplex Ethernet.

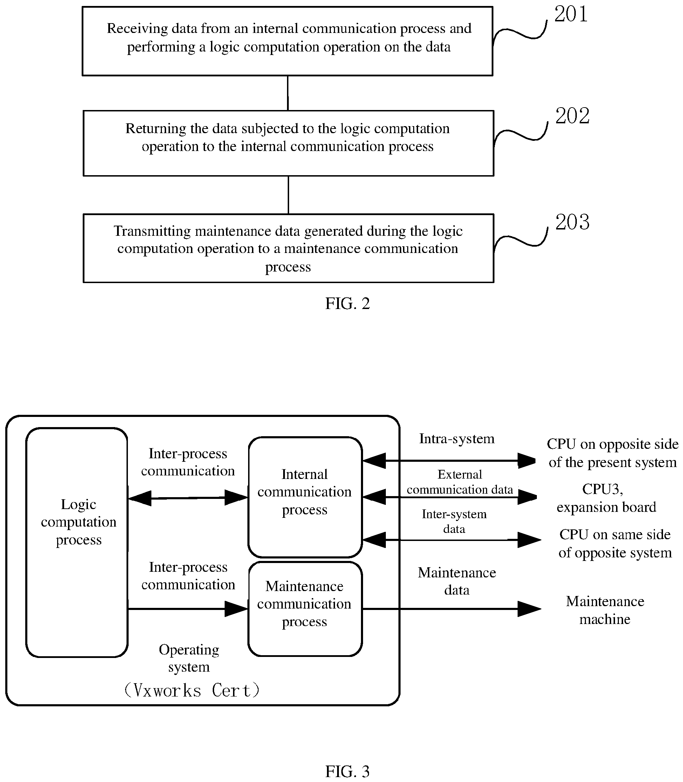

Based on the system shown in FIG. 1, an embodiment of the present invention provides a data processing method. FIG. 2 is a flow chart of the data processing method, and as shown in FIG. 2, the method comprises:

Step 201: receiving data from an internal communication process and performing a logic computation operation on the data, wherein, the logic computation operation includes a data synchronization comparison operation;

Step 202: returning the data subjected to the logic computation operation to the internal communication process;

Step 203: transmitting maintenance data generated during the logic computation operation to a maintenance communication process.

By performing logic computation operation on the data of internal communication process and then returning to the internal communication process, the safety data may be maintained synchronous, and by transmitting the maintenance data in the logic computation operation to the maintenance communication process, the system is monitored through the maintenance data, so as to improve safety of the vital computer system.

Specifically, the performing a logic computation operation on the data, includes: performing intra-system and inter-system synchronization comparison operations on the data; encapsulating the data subjected to the synchronization comparison operation; and transmitting the encapsulated data on a predetermined channel. By performing the synchronization comparison operation on the data, data can be synchronized, so as to ensure that the two series of systems may be in a same working state.

Before step 201, the internal communication process may further receive intra-system, inter-system and extra-system data, parse the intra-system, inter-system and extra-system data received by frames and layers, and transmit the data parsed by frames and layers on the predetermined channel. By transmitting the data on the predetermined channel, it is possible to further ensure safety of the data.

After the data subjected to the logic computation operation is returned to the internal communication process, the internal communication process performs protocol encapsulation on the data according to an output data instruction and then transmits the same.

When the output data instruction is outputting data outside of the system, a split operation is performed on the data to be output, the split data is subjected to protocol encapsulation, and transmitted outside of the system according to an intranet data sub-contracting protocol.

When the output data instruction is conducting to transmit synchronous data or backup data to another system, the data to be transmitted is subjected to safety protocol encapsulation, and transmitted to a corresponding system according to the intranet data sub-contracting protocol.

When the output data instruction is conducting to transmit stored data, the data to be transmitted is acquired from the stored data cache, and transmitted to a predetermined storage device according to a data sub-contracting protocol.

In order to further understand the embodiment of the present invention, the embodiment of the present invention is described in detail below based on the system shown in FIG. 1.

In an actual operation, the vital computer system shown in FIG. 1 may use a VxWorks operating system, the vital computer system provides a set of data safety business function framework for application software, the application software is based on the vital computer system framework, and is capable of implementing data safety comparison and redundant processing, which can meet high safety requirements of the system, and high availability required by a signal system.

A bottom layer of the vital computer system framework is an operating system interface adaptation layer; with the VxWorks operating system and its board support package (BSP) as underlying support, and by calling application programming interface (API) and BSP custom interface function of the operating system, it is possible to implement task scheduling, socket programming, interrupt management, and hardware-related driver functions. At a same time, the system framework shields the application software from the operating system's API, so that the application software can implement independence and portability of the operating system.

A task framework layer performs multitask partitioning on a system process, according to a timing requirement of the application software. A triggering condition for each task is singularized, and is coupled with other tasks through data only, which avoids control coupling or timing coupling.

FIG. 3 is a working schematic diagram of a plurality of processes based on a VxWorks operating system; as shown in FIG. 3, two-way communication is performed between the internal communication process and the logic computation process, one-way communication is performed between the logic computation process and the maintenance communication process, no direct communication is performed between the internal communication process and the maintenance communication process, and such a structure can improve safety of the vital computer. Hereinafter, the three processes are described in detail below in conjunction with FIG. 3.

### (1) Logic computation process

The input data is received from the internal communication process, the logic computation operation for all the input data is accomplished, and the generated output data is transmitted to the internal communication process. At a same time, according to requirements of specific applications, intermediate computation process data, system state data, and alarm data are transmitted to the maintenance communication process in a form of maintenance data.

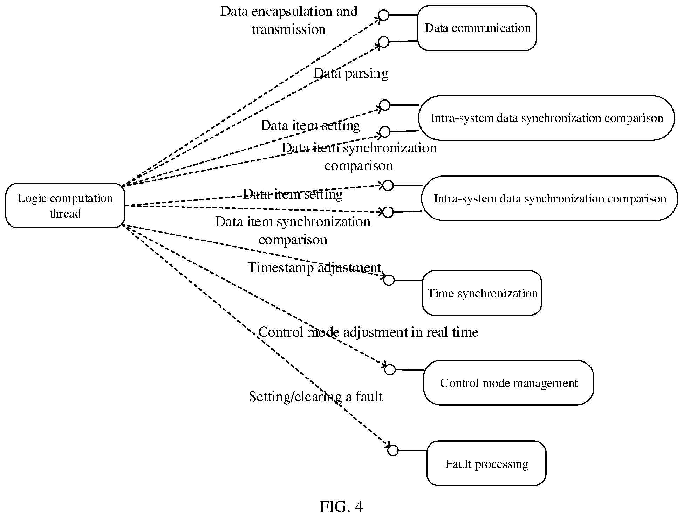

Within a synchronization cycle, the logic computation thread needs to accomplish intra-system and inter-system data synchronization comparison, time synchronization and real-time adjustment of a control mode within the present cycle. FIG. 4 shows an operation completed by a logic computation thread within one cycle; as shown in FIG. 4, the operation executed by the logic computation thread includes:
Data communication, for encapsulating, transmitting and parsing internal synchronization data, and performing channel identification;
Intra-system data synchronization comparison operation, for performing cyclic data intra-system synchronization comparison by data item setting and data item synchronization comparison;
Inter-system data synchronization comparison operation, for performing cyclic data inter-system synchronization comparison by data item setting and data item synchronization comparison;
Time synchronization operation, for performing cyclic intra-system and inter-system CPU module time synchronization and local timestamp refresh according to timestamp adjustment;
Control mode management, for performing adjustment strategy and refreshing of a dual-system control mode by adjusting control mode in real time;
Fault processing, for executing fault identification and processing of each synchronization cycle by setting/clearing a fault.

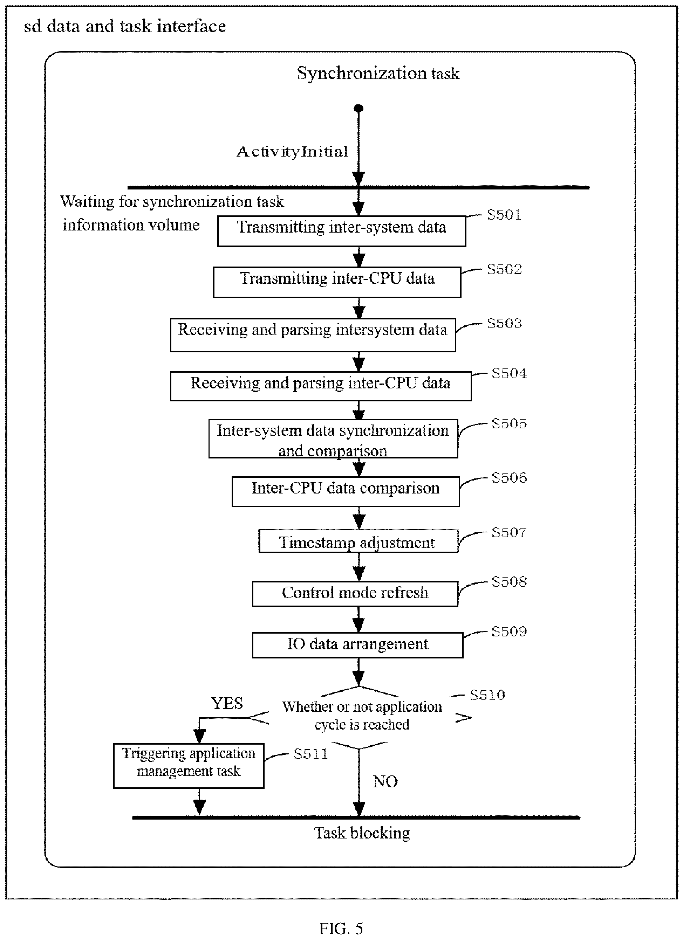

FIG. 5 is a flow chart of the logic computation thread; and as shown in FIG. 5, the logic computation thread includes:
Step 501: transmitting inter-system data;
Step 502: transmitting inter-CPU data;
Step 503: receiving and parsing the inter-system data;
Step 504: receiving and parsing the inter-CPU data;
Step 505: synchronizing and comparing the inter-system data;
Step 506: comparing the inter-system data;
Step 507: adjusting the timestamp;
Step 508: refreshing the control mode;
Step 509: arranging IO data;
Step 510: judging whether or not an application cycle is reached, if yes, executing step 511; otherwise, the application cycle being not reached and ending the process;
Step 511: triggering an application management task.

### (2) Internal communication process

All inter-system communication of the vital computer is in a mode of Ethernet, which mainly accomplishes a copying function of communication data, the internal communication process maintains multiple socket links, internal interface is the logic computation process, and the external interface may be divided into two threads, which are respectively a communication data receiving thread and an output data thread, and corresponding physical interfaces include three categories below:
CPU on an opposite side of the present system, as a port for transmitting the intra-system data;
CPU3, and Ethernet expansion board, for transmitting external communication data;
CPU on a same side of an opposite system, for transmitting the inter-system data.
Hereinafter, the communication data receiving thread and the output data thread are respectively described in detail.

### ∘1 Communication data receiving thread

The communication data receiving thread mainly accomplishes functions of internal data network monitoring and data receiving. In an actual operation, the communication data receiving thread includes two tasks: a high-priority task and a low-priority task, wherein, the high-priority task monitors and receives synchronization channel data, and the low-priority task monitors and receives external communication channel and inter-system big data quantity channel data. When there is data on a network port, the socket interface is called to receive the data, and accomplish parsing and grouping of the data packet.

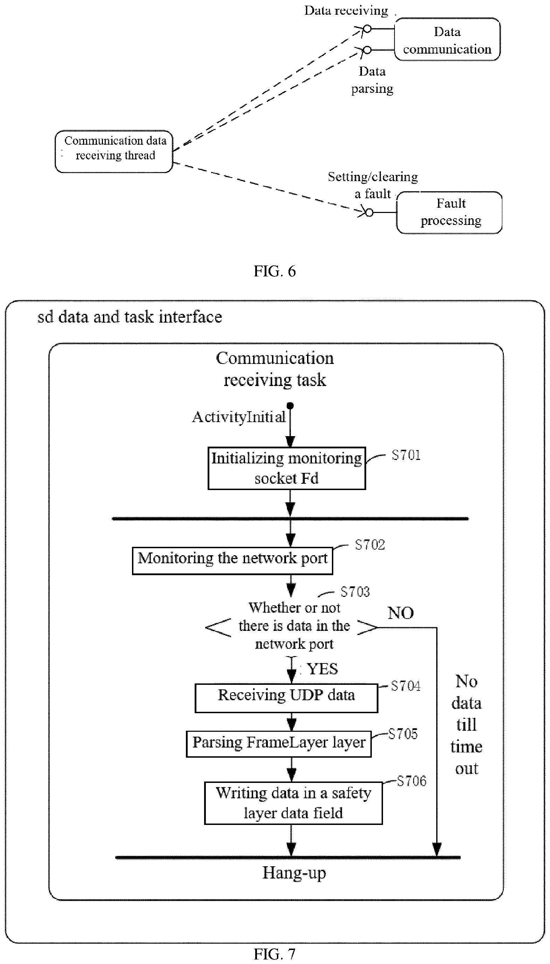

FIG. 6 is a schematic diagram of operation of the communication data receiving thread; and as shown in FIG. 6, the communication data receiving thread includes:

Data communication, for accomplishing network monitoring, data receiving, data parsing by frames and layers and channel identifying;

Fault processing, for executing fault identification of the present task by setting/clearing a fault.

FIG. 7 is a flow chart of the communication data receiving thread; and as shown in FIG. 7, the communication data receiving thread includes:
Step 701: initializing monitoring socket fd (a socket file descriptor);
Step 702: monitoring the network port;
Step 703: judging whether or not there is data in the network port, if yes, executing step 704, and if there is no data till timeout, ending the flow;
Step 704: receiving UDP data;
Step 705: parsing FrameLayer;
Step 706: writing data in a safety layer data field.

### o2 Output data thread

The output data thread waits for a data output event:

When an output external communication data event is received, data to be output is subjected to parity split according to CPU ID, and the split data is subjected to protocol encapsulation, and transmitted to an external communication device according to the intranet data sub-contracting protocol;

When the inter-system synchronization data event or a main system backup data transmission event are received, the inter-system synchronization data is subjected to safety protocol encapsulation, and transmitted to other systems according to the intranet data sub-contracting protocol;

When the storage data transmission event is received, data to be transmitted is acquired from a storage data cache and is transmitted to a storage device according to the data subcontracting protocol.

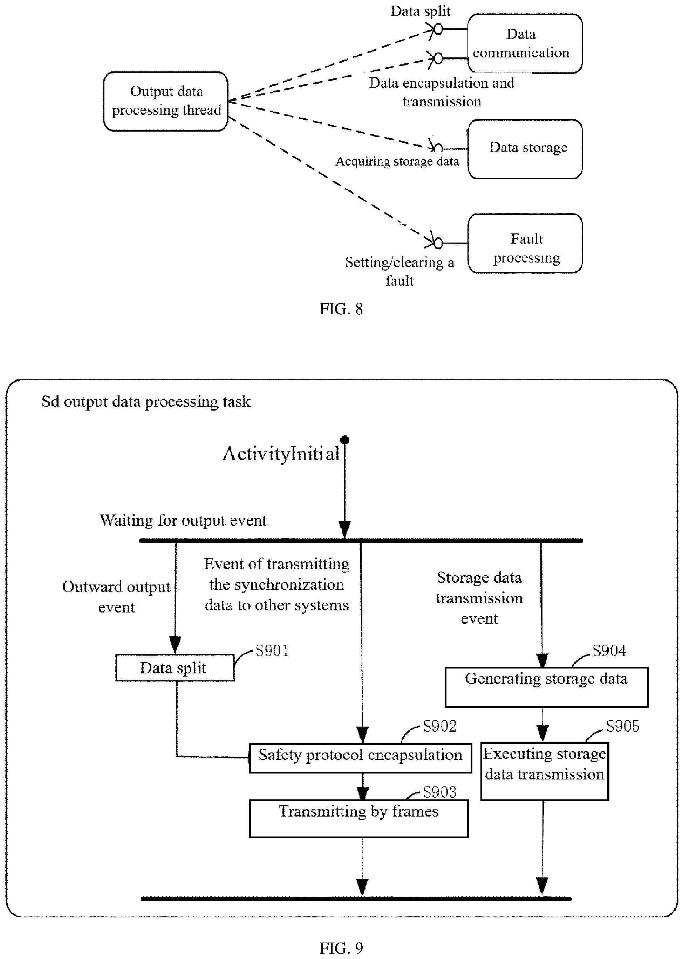

FIG. 8 is an operation schematic diagram of the output data thread; and as shown in FIG. 8, the output data thread includes:

Data communication, for executing data splitting, protocol encapsulating and data transmitting;

Data storage, for acquiring storage data to execute data storage;

Fault processing, for executing fault identification and processing of the present task by setting/clearing a fault.

FIG. 9 is a flow chart of the output data thread; and as shown in FIG. 9 , the output data thread includes:
Executing step 901, when it is the outward communication data output event;
Step 901: splitting the data, then executing step 902;
Executing step 902: when it is the event of transmitting the synchronization data to other systems;
Step 902: performing safety protocol encapsulation on the data, and then executing step 903;
Step 903: transmitting the data by frames, and then ending the flow;
Executing step 904, when it is a storage data transmission event;
Step 904: generating a storage data packet;
Step 905: executing storage data transmission, and then ending the flow.

### (3) Maintenance communication process

The maintenance communication process is a one-way data forwarding channel, and is mainly responsible for forwarding the maintenance data generated by a logic processing process to a maintenance machine. Here, the maintenance data is mainly intermediate computation process data, system state data, and alarm data, etc., generated during operation of the logic computation process, and is transmitted to the maintenance communication process by the logic computation process, so as to facilitate subsequent examination, and ensure safety of the system.

The data processing method according to the embodiment of the present invention may implement safety redundancy management of the system data, provide safe and reliable data and communication channels for the application software, and implement monitoring and redundancy switching processing of the system state.

Based on a similar inventive concept, an embodiment of the present invention further provides a data processing apparatus, which may implement the above-described method.

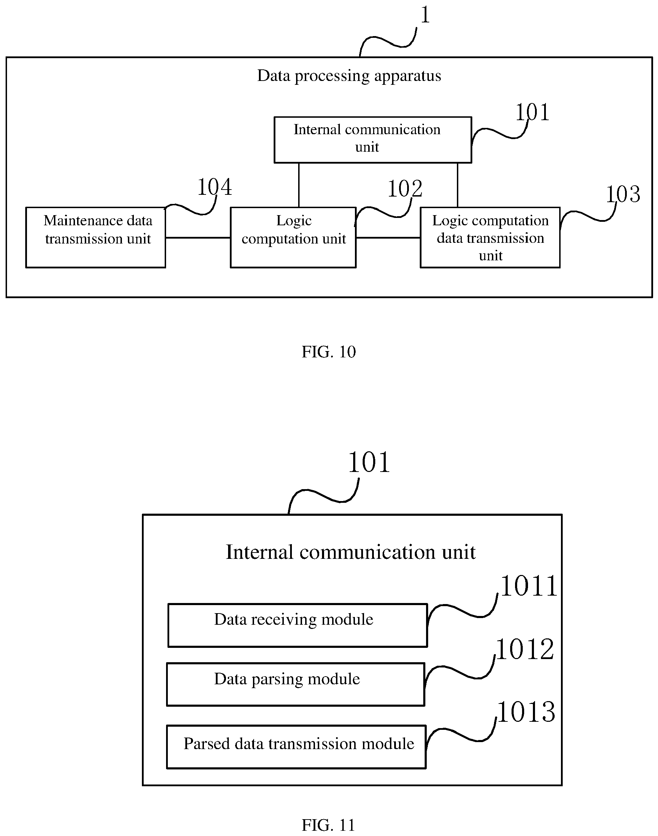

FIG. 10 is a structural block diagram of a data processing apparatus according to the embodiment of the present invention; and as shown in FIG. 10, the apparatus comprises: an internal communication unit 101, a logic computation unit 102, a logic computation data transmission unit 103 and a maintenance data transmission unit 104, wherein:
The logic computation unit 102, configured to receive data from an internal communication process and perform a logic computation operation on the data, wherein, the logic computation operation includes a data synchronization comparison operation;
The logic computation data transmission unit 103, configured to return the data subjected to the logic computation operation to the internal communication process;
The maintenance data transmission unit 104, configured to transmit maintenance data generated during the logic computation operation to a maintenance communication process.

By performing the logic computation operation on the data of the internal communication process and then returning to the internal communication process, the safety data may be maintained synchronous, and by transmitting the maintenance data in the logic computation operation to the maintenance communication process, it is possible to implement monitoring on the system through the maintenance data, so as to ensure safety of the vital computer system.

Specifically, as shown in FIG. 11, the internal communication unit 101 includes:
A data receiving module 1011, configured to receive intra-system, inter-system and extra-system data;
A data parsing module 1012, configured to parse the data received by the data receiving module 1011 by frames and layers;
A parsed data transmission module 1013, configured to transmit the data parsed by frames and layers to the logic computation unit 102 on a predetermined channel.

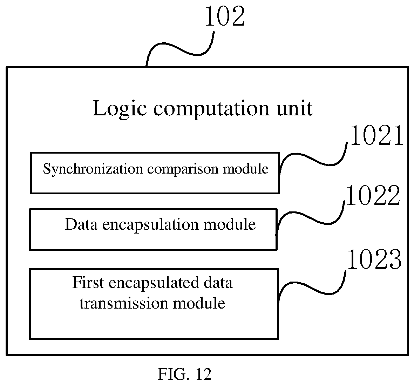

As shown in FIG. 12, the logic computation unit 102 includes:
A synchronization comparison module 1021, configured to perform intra-system and inter-system synchronization comparison operation on the received data;
A data encapsulation module 1022, configured to encapsulate the data subjected to the synchronization comparison operation;
A first encapsulated data transmission module 1023, configured to transmit the encapsulated data on the predetermined channel.

The internal communication unit 101 further includes: a second encapsulated data transmission module (not shown in the diagram), configured to perform protocol encapsulation on the data according to an output data instruction and then transmit the same. Specifically, after the logic computation data transmission unit 103 returns the data subjected to the logic computation operation to the internal communication process, the second encapsulated data transmission module may perform protocol encapsulation on the data according to the specific output data instruction and then transmit the same.

Since a principle for the apparatus to solve the problem is similar to that of the data processing method, for implementation of the apparatus, implementation of the data processing method may be referred to, and repeated parts will not be described.

An embodiment of the present invention further provides a computer readable storage medium, the computer readable storage medium storing the computer program executing the above-described method.

In summary, by the embodiments of the present invention, data safety redundancy management may be implemented, to provide the application software with safe and reliable data and communication channels, and implement state monitoring and redundancy switching processing on the system. Specifically, the vital computer system according to the embodiments of the present invention may implement functions below:

### (1) Safety critical data 2-vote-2 function

The system is capable of performing intra-system double-machine cross comparison on input and output data of the application software, executing safety processing when a comparison result show that they are inconsistent, performing double-machine interactive comparison on system operation state information, confirming that the two intra-system machines are in a same working state in real time; and at a same time, is capable of implementing process data cross comparison function of the application software, implementing real-time monitoring of the application software, and confirming that the double-machine application software keeps operating synchronously.

### (2) Data dual-system redundancy processing function

The system is capable of implementing dual-system synchronization working management, executing consistency processing on the dual-system input and output data by dual-system data exchange; performing real-time interaction of the dual-system operation state, implementing a failover system function; and is also capable of providing process data inter-system interaction function of the application software.

### (3) External safety communication function

The intra-system and the inter-system vital computer implements IO data communication of the external communication device via the internal Ethernet communication network. The internal network is isolated from the external network, and ensures data safety by using a dedicated communication protocol.

### (4) Application software call interface management function

The system is capable of encapsulating underlying functions, providing call interfaces for operation software, and implementing execution of logical functions and data transmission.

### (5) System state real-time management function

The system is capable of monitoring execution state of the operating software, finding abnormalities in real time, and executing safety processing.

### (6) System self-diagnosis and maintenance management

The system is capable of self-checking cyclically, promptly alarming when a fault is found, and executing fault safety processing.

Obviously, those skilled in the art should understand that, respective modules or respective steps according to the present invention as described above may be implemented by a general-purpose computer system, which can be centralized on a single computer, or distributed on a network formed by a plurality of computing apparatuses; alternatively, they can be implemented with computer apparatus executable program codes, so that they can be stored in a storage apparatus to be executed by a computing apparatus, or they can be implemented by respectively fabricating them into respective integrated circuit modules, or fabricating a plurality of modules or steps among them into a single integrated circuit module. Thus, the present invention is not limited to any specific combination of hardware and software.

The above are only preferred embodiments of the present invention, but are not used for limiting the present invention; for those skilled in the art, various alternations and modifications may be made to the present invention.

## Claims

1. A data processing method implemented by a vital computer system, the vital computer system including a I-series system, a II-series system, and a maintenance machine, each of the I-series and II-series system comprising a 2-vote-2 vital computer and a multiplex Ethernet interface, wherein
the method comprises:
in a logic computation process, receiving input data from an internal communication process, and performing a logic computation operation on the input data and generating output data, wherein, the logic computation operation includes a data synchronization comparison operation;
transmitting the output data generated by the logic computation operation to the internal communication process, wherein two-way communication is performed between the internal communication process and the logic computation process,
in the internal communication process, performing protocol encapsulation on the output data according to an output data instruction and then transmitting the encapsulated data outside of the vital computer system; the method further comprising:
transmitting maintenance data generated during the logic computation operation to a maintenance communication process, wherein the maintenance data includes intermediate computation process data, wherein the maintenance communication process is a one-way data forwarding channel, and is responsible for forwarding the maintenance data generated by a logic processing process to the maintenance machine, wherein one-way communication is performed between the logic computation process and the maintenance communication process, and no direct communication is performed between the internal communication process and the maintenance communication process,
monitoring the vital computer system through the maintenance data, so as to ensure safety of the vital computer system.

2. The method according to claim 1, wherein, before receiving input data from an internal communication process, the method further comprises:
the internal communication process receiving intra-system, inter-system and extra-system data;
parsing the intra-system, inter-system and extra-system data received by frames and layers;
transmitting the data parsed by frames and layers on the predetermined channel.

3. A computer readable storage medium, wherein, the computer readable storage medium stores a
computer program executing the method according to any one of claims 1 to 2.

## Patentansprüche

1. Datenverarbeitungsverfahren, das von einem sicheren Computersystem implementiert wird, wobei das sicheren Computersystem ein I-Seriensystem, ein II-Seriensystem und eine Wartungsmaschine umfasst, wobei jedes der I-Seriensysteme und II-Seriensysteme einen 2-vote-2 sicheren computer und eine Multiplex-Ethernet-Schnittstelle umfasst,
wobei das Verfahren umfasst:
in einem logischen Berechnungsprozess, Empfangen der Eingabedaten von einem internen Kommunikationsprozess, und Durchführen einer logischen Berechnungsoperation an den Eingabedaten, und Erzeugen von Ausgabedaten, wobei die logische Berechnungsoperation eine Datensynchronisationsvergleichsoperation umfasst;
Übertragen der durch die logischen Berechnungsoperation erzeugten Ausgabedaten an den internen Kommunikationsprozess, wobei eine bidirektionale Kommunikation zwischen dem internen Kommunikationsprozess und dem logischen Berechnungsprozess durchgeführt wird,
in dem internen Kommunikationsprozess, Durchführen einer Protokollkapselung der Ausgabedaten gemäß einer Ausgabedatenanweisung und Übertragen der gekapselten Daten nach außerhalb des sicheren Computersystems;
wobei das Verfahren weiterhin umfasst:
Übertragen der während der logischen Berechnungsoperation erzeugten Wartungsdaten an einen Wartungskommunikationsprozess, wobei die Wartungsdaten Daten aus Zwischenberechnungsprozessen umfassen, wobei der Wartungskommunikationsprozess ein Einweg-Datenweiterleitungskanal ist und für die Weiterleitung der von einem Logikverarbeitungsprozess generierten Wartungsdaten an die Wartungsmaschine verantwortlich ist, wobei eine Einwegkommunikation zwischen dem logischen Berechnungsprozess und dem Wartungskommunikationsprozess durchgeführt wird, und keine direkte Kommunikation zwischen dem internen Kommunikationsprozess und dem Wartungskommunikationsprozess durchgeführt wird,
Überwachung des sicheren Computersystems durch die Wartungsdaten, um die Sicherheit des sicheren Computersystems zu gewährleisten.

2. Verfahren nach Anspruch 1, wobei vor dem Empfangen von Eingabedaten von einem internen Kommunikationsprozess das Verfahren weiterhin umfasst:
im internen Kommunikationsprozess, Empfangen von Daten innerhalb des Systems, zwischen den Systemen und außerhalb des Systems;
Analysieren der von Frames und Layern empfangenen Daten innerhalb des Systems, zwischen den Systemen und außerhalb des Systems;
Übertragen der von Frames und Layern analysierten Daten auf dem vorgegebenen Kanal.

3. Computerlesbares Speichermedium, wobei das computerlesbare Speichermedium ein Computerprogramm speichert, das das Verfahren gemäß einem der Ansprüche 1 bis 2 ausführt.

## Revendications

1. Procédé de traitement de données mis en oeuvre par un système informatique vital, le système informatique vital comprenant un système de série I, un système de série II et une machine de maintenance, chacun des systèmes de série I et de série II comprenant un ordinateur vital 2-vote-2 et une interface Ethernet multiplex,
ledit procédé comprenant :
dans un processus de calcul logique, la réception de données d'entrée en provenance d'un processus de communication interne, et la réalisation d'une opération de calcul logique sur les données d'entrée et la génération de données de sortie, ladite opération de calcul logique comprenant une opération de comparaison de synchronisation de données ;
la transmission des données de sortie générées par l'opération de calcul logique au processus de communication interne, une communication bidirectionnelle étant réalisée entre le processus de communication interne et le processus de calcul logique,
dans le processus de communication interne, la réalisation d'une encapsulation de protocole sur les données de sortie selon une instruction de données de sortie, et ensuite la transmission des données encapsulées à l'extérieur du système informatique vital ;
ledit procédé comprenant en outre :
la transmission de données de maintenance générées durant l'opération de calcul logique à un processus de communication de maintenance, lesdites données de maintenance comprenant des données de processus de calcul intermédiaire, ledit processus de communication de maintenance étant un canal de transfert de données unidirectionnel, et étant responsable du transfert des données de maintenance générées par un processus de traitement logique vers la machine de maintenance, une communication unidirectionnelle étant réalisée entre le processus de calcul logique et le processus de communication de maintenance, et aucune communication directe n'étant réalisée entre le processus de communication interne et le processus de communication de maintenance,
la surveillance du système informatique vital à travers les données de maintenance, de façon à assurer la sécurité du système informatique vital.

2. Procédé selon la revendication 1, avant la réception de données d'entrée en provenance d'un processus de communication interne, ledit procédé comprenant en outre :
le processus de communication interne recevant des données intra-système, inter-système et extra-système ;
l'analyse des données intra-système, inter-système et extra-système reçues par des trames et des couches ;
la transmission des données analysées par trames et couches sur le canal prédéfini.

3. Support de stockage lisible par ordinateur, ledit support de stockage lisible par ordinateur stockant un programme informatique exécutant le procédé selon l'une quelconque des revendications 1 à 2.
